# EUROPEAN PATENT APPLICATION

(11) **EP 1 833 002 A1**
(43) Date of publication of application: **12.09.2007**
(21) Application number: 06405107.1
(22) Date of filing: 08.03.2006
(51) Int. Cl.: G06K 9/00

(54) **Method and apparatus for obtaining biometric image samples or biometric data**

(71) Applicant: ID-Development AG, 6039 Root (CH)
(72) Inventor: Frischholz, Robert, Dr., 90427 Nürnberg (DE); Klische, Marcus, 6039 Root (CH)
(74) Representative: Rutz & Partner

(57) **Abstract**

The inventive method and apparatus allow obtaining biometric image samples or biometric image data by capturing a biometric image sample from the face of an end user with an image recording device (101) that is controlled by a control unit (104) by means of a capturing module (105). According to the present invention a background sample of the background in the recording area is captured when no end user is present in order to obtain background information. Subsequently a biometric image sample is captured from the end user. Image data of the biometric image sample is then processed based on the obtained background information in order to obtain accurate data of the background information contained in the biometric image sample. The resulting data of the background information contained in the biometric image sample can then be used for analysis or can be deleted in order to improve the quality of the biometric image data extracted from the biometric image sample.

## Description

The present invention relates to a method and an apparatus that allow obtaining biometric (facial) image samples or biometric (facial) data of improved and standardised quality.

The present invention relates in particular to a method and an apparatus for capturing improved biometric image samples from an end user that can be used for extracting biometric data for a biometric template or for comparison with a biometric template, which may be part of a Machine Readable Travel Document (MRTD).

Further, the present invention relates to a method and an apparatus for extracting improved biometric image data from the biometric image samples.

### BACKGROUND OF THE INVENTION

According to specifications and standards established by the International Civil Aviation Organization ICAO (http://www.icao.int/icao/en/m-about.html) a Machine Readable Travel Document (MRTD) is an international travel document (e.g. a passport or visa) that facilitates the border-crossing processes involved in international air transport such as immigration and customs procedures.

Each type of MRTD contains, in a standard format, the holder's identification details, including a photograph or digital image, with mandatory identity elements reflected, e.g. in a two-line machine readable zone (MRZ) printed in Optical Character Recognition-B (OCR-B) style. Standardization of elements in the travel document allows all participating countries using properly configured readers to read the MRZs of the MRTDs of all other countries issuing the same type of document.

MRTDs currently in existence include Machine Readable Passports (MRP), Machine Readable Visas (MRVs) and Machine Readable Official Travel Documents (TDs).

According to standards issued by the ICAO "Biometric identification" is a generic term used to describe automated means of recognising a living person through the measurement of distinguishing physiological or behavioural traits. Based on "Biometric identification" the process of comparing a biometric sample with a previously stored reference template or templates can be performed. For verification purposes a one-to-one match is performed between proffered biometric data obtained from the MRTD holder now, and a biometric template created when the holder enrolled in the system. Hence, with the verification function, a positive match between a travel document and the person who presents it can be made. For identification purposes a one-to-many search is performed between proffered biometric data and a collection of "biometric template" representing all of the subjects who have enrolled in the system.

A "biometric template" is a representation of the trait created by a technical system, and enables comparisons to be performed to score the degree of confidence that separately recorded traits identify the same person.

"Biometric identification" is performed by means of a Biometric System, which is an automated system that is capable of:
1. capturing a biometric sample from an end user;
2. extracting biometric data from that biometric sample;
3. comparing that specific biometric data values with that contained in one or more reference templates;
4. deciding, preferably based on a threshold, how well the data match; and
5. indicating whether or not an identification or verification of identity has been achieved.

From the six generic types of biometric in use today (face, eye(s), finger(s), hand, signature and voice), face recognition is of paramount importance since the image data of a person can not only be processed by machines but also by human resources. Hence image data is stored in the MRTD in form of an eyereadable image, e.g. as a printed or attached photograph, and electronically, e.g. compressed in a JPEG format, in a semiconductor memory.

A token image is a portrait of the holder of the MRTD, typically a full frontal image, which has been adjusted in size to ensure a fixed distance between the eyes. It may also have been slightly rotated to ensure that an imaginary horizontal line drawn between the centres of the eyes is parallel to the top edge of the portrait rectangle if this has not been achieved when the original portrait was taken or captured.

For "Biometric identification" it would be desirable if the proffered biometric data obtained from a MRTD holder for a comparison process, and biometric data contained in the biometric template created when the same holder was enrolled in the system, would be identical. Although this will never be achieved measures are taken which ensure that captured biometric data taken from an end user vary within a small range only.

This is achieved in a first step with photograph guidelines issued by the ICAO, which instruct the end user of how to prepare for the capturing process. Some of the important aspects are, keeping the head straight, centred and at the correct distance. Further, wearing of hats and caps, hair the head or other people appearing within the viewing angle of the image recording device (a digital camera or video camera) must be avoided.

Hence, for the enrolment and comparison processes only biometric samples are accepted by the personnel, which comply with the guidelines.

Minor defects however can be corrected by processing the biometric data extracted from the biometric sample. A Biometric System may for example draw a line through the eyes and then rotate the images until the line is horizontally aligned.

However evaluation of biometric data based on said guideline criteria and possible repetitions of capturing processes are cumbersome for personnel and end users. Automatic correction capabilities of the Biometric Systems are strongly limited and require system wide implementation.

Still further even, if the end user completely adheres to the photograph guidelines issued by the ICAO the deviation of the obtained biometric data from an optimal quality may still be to large and dependent on various aspects. As a result, relatively large thresholds must be used which may lead to false acceptances (or a high false acceptance rate), i.e. incorrect identification of an individual or incorrect verification of an impostor against a claimed identity. If however small thresholds are used false rejections (or a high false rejection rate) may occur, with a biometric system failing to identify an enrolee or failing to verify the legitimate claimed identity of an enrolee.

It would therefore be desirable to provide an improved method and an improved apparatus that allow obtaining biometric image samples and/or biometric image data.

It would be desirable in particular to provide a method and an apparatus that allow obtaining biometric image samples and/or biometric image data with a reduced deviation from an optimal value and being suitable for incorporation in a Machine Readable Travel Document (MRTD).

Further it would be desirable to create an apparatus that can be used for enrolment purposes and/or as a biometric system that is capable of performing identification and/or validation processes.

Still further it would be desirable to create an apparatus that can operate decentralised and still can securely be integrated into the overall registration or enrolment system.

### SUMMARY OF THE INVENTION

The above and other objects of the present invention are achieved by a method, an apparatus and a biometric system according to claim 1 and 10 respectively.

The inventive method and apparatus allow obtaining biometric image samples or biometric image data by capturing a biometric image sample from the face of an end user with an image recording device, such as a camera, particularly a video camera, which is controlled by a control unit by means of a capturing module.

According to the present invention a background sample of the background in the recording area is captured when no end user is present in order to obtain background information. Subsequently a biometric image sample is captured from the end user. Image data of the biometric image sample is then processed based on the obtained background information in order to obtain accurate data of the background information contained in the biometric image sample.

In a preferred embodiment a plurality of background samples is captured and an averaged background sample is calculated. With this measure, random fluctuations above and below actual image data will gradually even out as more and more images are processed, so that noise is gradually reduced and luminance is approaching true values.

For further processing, the background image, preferably an averaged background image, is split into small segments, which are sequentially compared with segments of the biometric image sample. Subsequently, segments of the biometric image sample, which are matching the background segments with a difference that lies within a predefined operating threshold, are classified as background.

For calculating the operating threshold, segments, preferably border segments of the background sample, which are expected to lie apart from the area of biometric content, are compared with corresponding segments of the biometric image sample. Based on this comparison the differences of the segments, preferably the differences of the significant elements thereof, are calculated and weighted with at least one tolerance factor. Hence with this step, known background from the captured or averaged background sample is compared with known background from the captured biometric image sample in order to evaluate the optical differences between identical parts. If for example only a specific spectral difference is detected, e.g. because of the colour of the clothes the end user is wearing, a higher threshold can be selected only for this spectral region.

The resulting data of the background information contained in the biometric image sample can then be used for further analysis or can directly be deleted in order to improve the quality of the biometric image sample and/or the biometric data that subsequently are extracted from the biometric image sample.

By exactly removing background information before biometric image data are extracted from the biometric image sample, the quality of biometric data can be improved, resulting in lower false acceptance rates or false rejection rates.

Further, preferably in addition or as an alternative the non-biometric background data can be analysed in order to determine whether the biometric sample or data is in conformance with a predetermined standard. Compared to known techniques which concentrate on the pictured head of the end user, this technique has various advantages, since the purified background information has in many aspects a higher information content than the biometric content of the image, i.e. the pictured head of the end user, which can horizontally be aligned with known techniques by rotating the line between the pictured eyes into horizontal alignment.

According to the present invention, based on the captured biometric image sample, it is determined, whether the background data or background area
a) contains asymmetries indicating;
b) contains optical disturbances that were not present in the initially recorded background;
c) contains possibly moving background objects that were not present in the initially recorded background;
d) is smaller or larger than given thresholds indicating that the distance of the end user from the image recording device (101) is incorrect.

For example, the recording area can be split in two halves or four quadrants. By comparing the background areas contained in these segments, it can be detected if the head of the end user is tilted and/or not centred or if foreground disturbances are present. By bringing the background areas into balance the head can easily be vertically aligned. If the background area is not within a given range the head of the end user has not been in the correct distance range. This can be corrected by zooming the image until the background area is within the correct range.

Optical effects and disturbing background effects, e.g. moving people, can be detected and some instances automatically be deleted.

However the unsuitable position of the end user or background disturbances may not be correctable. In these events messages are provided to the end user indicating the detected problem.

In order to facilitate the detection of the position of the position of the end user static or dynamic reference marks may be provided in the background of the recording area. Preferably optical transmitters are provided that project light onto selected spots on the background. While disturbing background elements are removed from the background, these reference marks are helpful for image processing.

In order to obtain correct and accurate background information objects such as reference marks contained in the captured biometric image sample are compared to objects contained in the background sample. Matching of said objects indicates that they are not part of the end user. Matching objects can therefore be classified as non-biometric background data, either as common background data, which can be analysed and deleted or as reference marks that are used for performing a more accurate analysis.

In further stages the biometric image sample or the extracted biometric image data can be processed for enrolment, identification or validation purposes.

Typically, inventive apparatuses will be used decentralised and distant from the registration authority. In these cases it would be possible to provide the biometric image sample or the extracted biometric image data to the end user or to an official person who would forward it to the registration authority. However in this way the biometric image sample or the extracted biometric image data could get altered, delayed in delivery or lost.

Hence, in a preferred embodiment of the invention the obtained biometric image data are sent electronically, preferably encrypted, signed and compressed, and accompanied by identification data and credentials of the end user over a network, e.g. the Internet to the registration authority.

Preferably the transferred data are encrypted by means of a key of an asymmetric key pair that has been issued by the registration authority and then sent electronically to the registration authority.

The registration authority may assign a bulk of keys of asymmetric key pairs to each inventive apparatus. With such a key, preferably a key that later may be used as the public key of a PKI system, the data can be encoded. This public key will preferably be used as the electronic identification number of the certificate, e.g. the MRTD to be issued by the registration authority.

Hence, the transferred data that has been encrypted by means of the PKI key can only be decrypted by the Registration Authority which is the holder of the second key. After the certificate has been issued the registration authority may forward the second key to the certificate holder or end user, who may use it as a private key.

The biometric image data may also be accompanied by additional biometric data, preferably a fingerprint that also be sent encrypted as all the other data.

### BRIEF DESCRIPTION OF THE DRAWINGS

Some of the objects and advantages of the present invention have been stated, others will appear when the following description is considered together with the accompanying drawings, in which:
- Figure 1: shows, through the lens of a camera of an inventive apparatus, an end user in a first inappropriate position with the head not centred and tilted;
- Figure 2: shows the end user in a second inappropriate position with the head too close to the camera;
- Figure 3: shows, through the lens of the camera, the end user and an optical disturbance such as a bright spot or a shadow in the background;
- Figure 4: shows, through the lens of the camera, the end user and background details that may influence the extraction of biometric data from a captured biometric sample;
- Figure 5: shows the end user with a (static or moving) human background disturbance;
- Figure 6: shows the end user with a symbolically drawn foreground disturbance such as a hat;
- Figure 7: shows the end user in an ideal position without any background elements in the area of interest;
- Figure 8: shows the end user in the first inappropriate position with the background separated in two halves with a system of coordinates;
- Figure 9: shows end user data and background data distributed in four quadrants of a system of coordinates;
- Figure 10: shows, as in figure 4, the end user and background details that influence the extraction of biometric data from a captured biometric sample;
- Figure 11: shows data extracted from an image captured from the end user shown in figure 10 indicating the problem of separating biometric data from data originating from background elements;
- Figure 12: shows capturing of background data used for position detection and image processing;
- Figure 13: shows image processing based on background data captured in figure 12;
- Figure 14: shows foreground detail detection based on background data captured in figure 12;
- Figure 15: shows background detail detection based on background data captured in figure 12;
- Figure 16: shows an inventive apparatus 1 that has been extended to a Biometric System by installing a biometric identification module 106;
- Figure 17: shows the apparatus 1 of figure 16, that is connected to an authority 1000 via communication line 109, over which secure transfer of biometric data is performed;
- Figure 18: shows a biometric image sample with several deficiencies;
- Figure 19: shows the biometric image sample corrected by means of the inventive method and apparatus;
- Figure 20: shows a biometric image sample during the process of detecting background based on the averaged background sample shown in figure 20; and
- Figure 21: shows the averaged background sample.

### DETAILED DESCRIPTION OF THE PREFERRED EMBODIMENTS

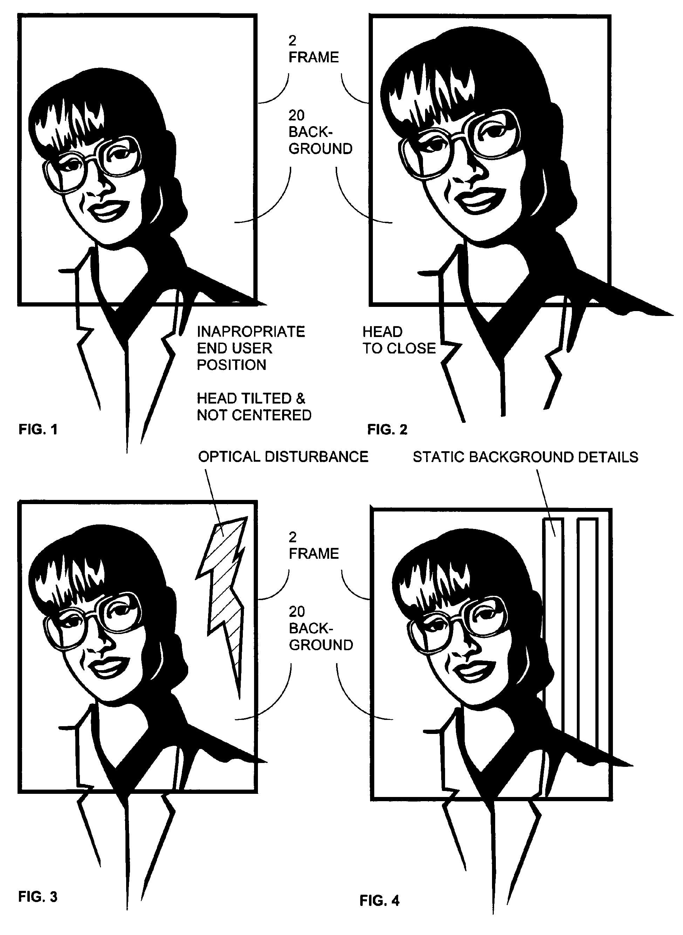

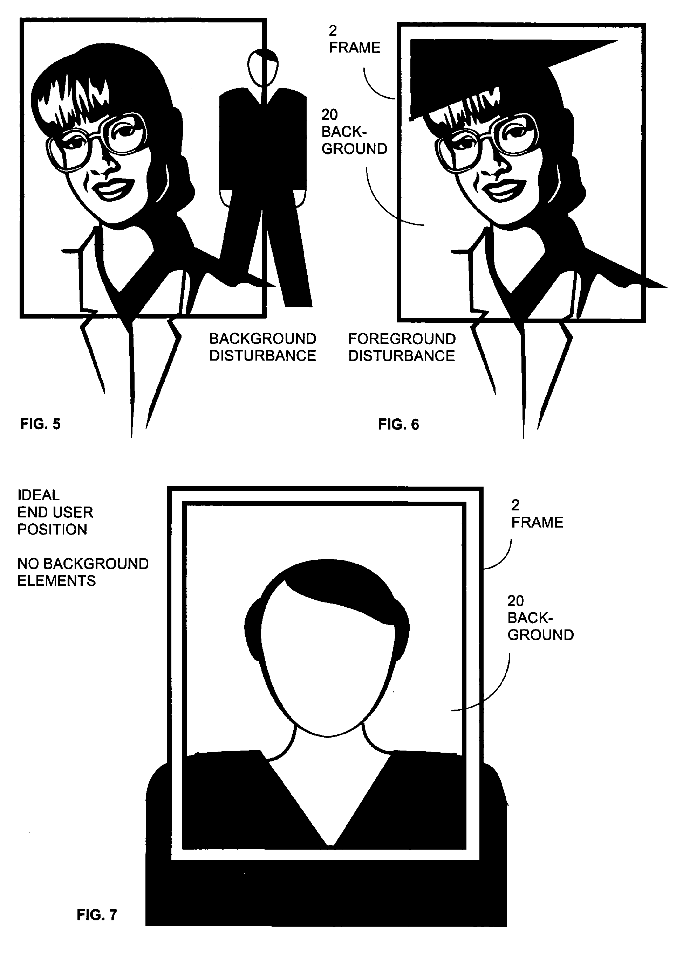

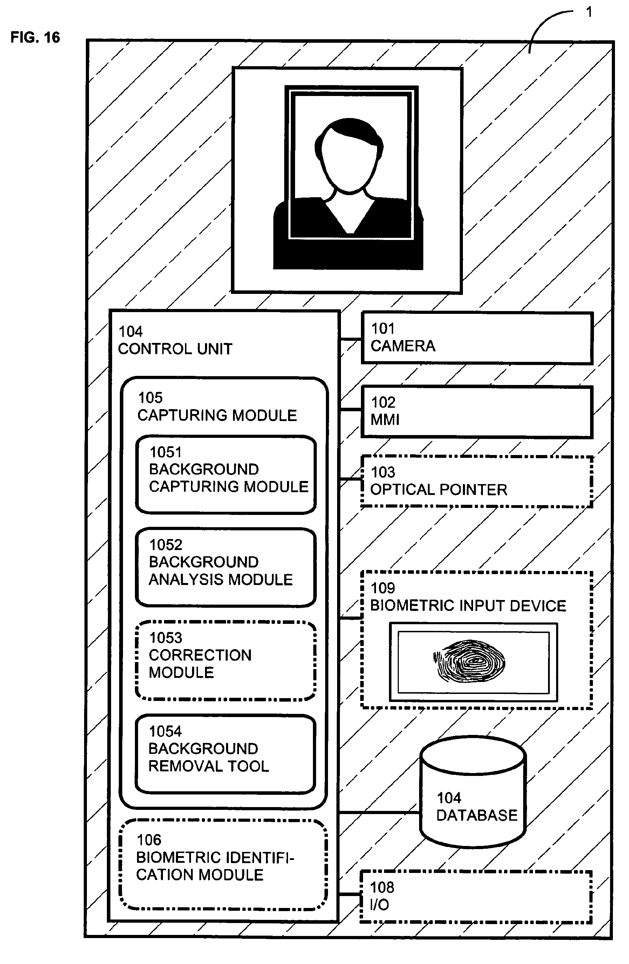

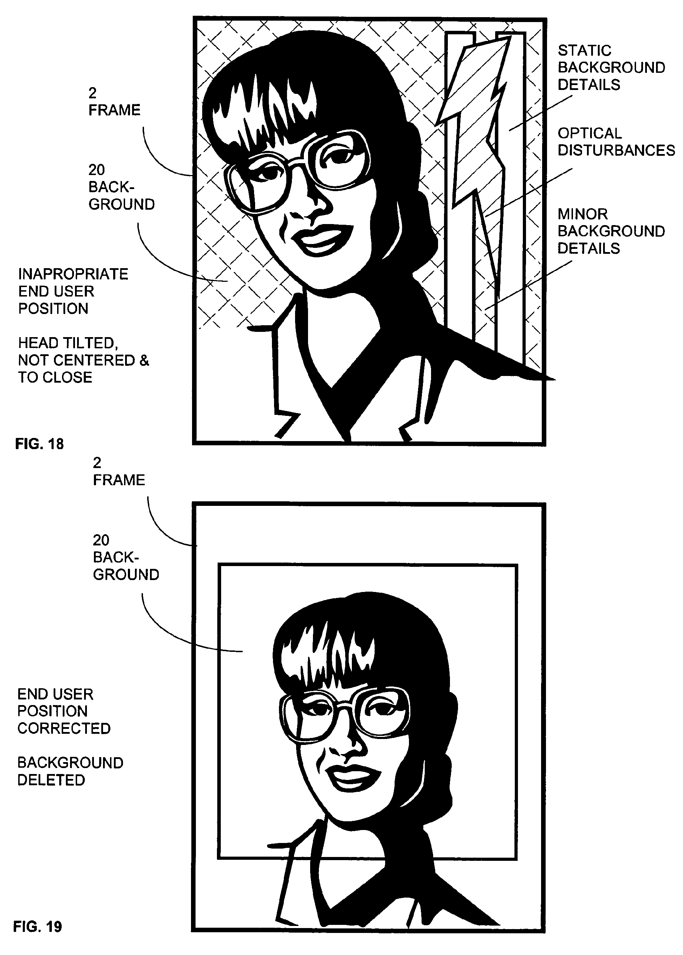

Figures 1-6 show an end user (e.g. an enrolee or person for whom identification or validation procedures shall be performed), through the lens of a camera 101 of an inventive apparatus 1 (see figure 16). From the figures 1-6 it can be seen that the arrangements shown are not satisfactory due to inappropriate positions of the end user (head tilted, head not centred or head too close to the camera) or due to disturbing static and dynamic background elements or foreground elements. Figure 4 shows two vertically aligned rectangular elements, on which shadows or light reflections may appear as shown in figure 3. Figure 5 shows people moving in the background and figure 6 symbolically shows the end user with partially covered hair, e.g. by a hat. Figure 18 shows a captured biometric image sample displaying a combination of deficiencies (head of the end user not centred, tilted and to close to the camera plus grave static and dynamic as well as minor background effects).

Figure 6 shows the ideal end user position without any disturbances.

Detection and/or correction of the deficiencies in the biometric image sample of figure 18 are difficult to achieve with known techniques, which allow slight corrections only. Possible are slight rotations with the alignment of an imaginary line drawn between the centres of the eyes in parallel to the top edge of the portrait rectangle or frame 2. However when the position of the end user is more than slightly inappropriate then it may be difficult to draw said imaginary line.

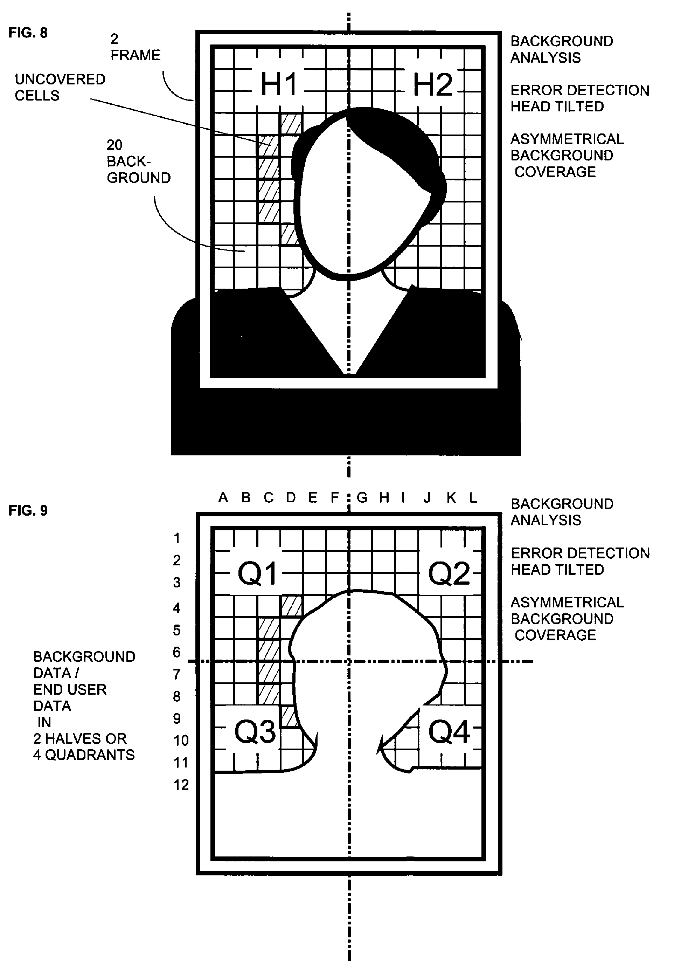

Hence instead of concentrating on the face of the end user, the invention focuses on the background. From figure 8 it can be seen that the tilting of the head of the end user results in an asymmetric coverage of the two halves H1, H2 of the background, which are separated by a vertical center line.

By counting the free squares in an imaginary help grid it can be determined that the coverage in the left half is significantly lower than the coverage in the right half of the background.

Hence the inappropriate position of the end user can be detected. Before capturing the biometric image sample the inappropriate position can be communicated to the end user asking for a correction. If the biometric image sample has already been captured the image may be rotated until the symmetry of the two halves H1, H2 of the background is established. After this correction has been completed the biometric image sample would be ready for the extraction of biometric data. However by drawing an imaginary line between the centres of the eyes in parallel to the top edge of the portrait rectangle or frame 2 the correctness of the alignment could be verified. Since the correction has already taken place based on the inventive method, drawing of the imaginary line between the centres of the eyes would be significantly facilitated.

Separation of the background in four quadrants, as shown in figure 9, allows shifting the pictured head of the end user into the center by balancing the coverage of the squares in the upper and lower quadrants of the help grid. Subsequently the head can be rotated into a corrected position as described above.

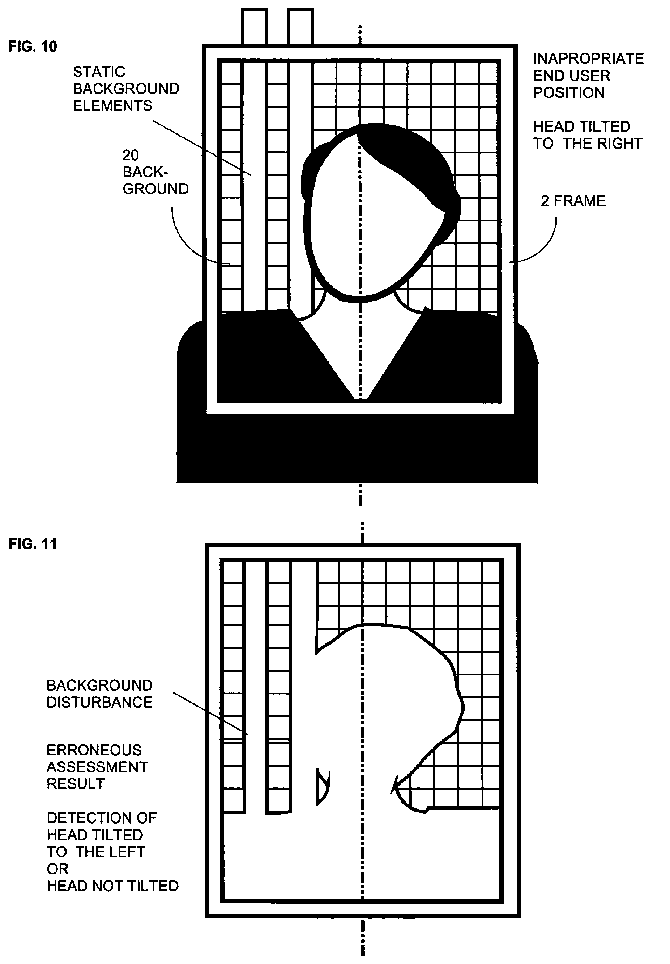

Figure 10 shows the end user in the position of figure 8. In addition, static elements have been added to the background, which can have a disturbing influence, generally in the process of extracting biometric data from the resulting biometric sample or specifically in the process of analysing the background data for the purposes described above.

As shown in figure 11, the interpretation of the data originating from the static background elements may cause problems in a way that a separation of facial data and background data could not be possible. As a result a misinterpretation could occur indicating that squares in the left side half of the imaginary help grid, which relate to the background elements, are covered by the end user. As a result the applied algorithm could erroneously detect, that the head of the end user is tilted to the left (viewed from the camera), instead of to the right.

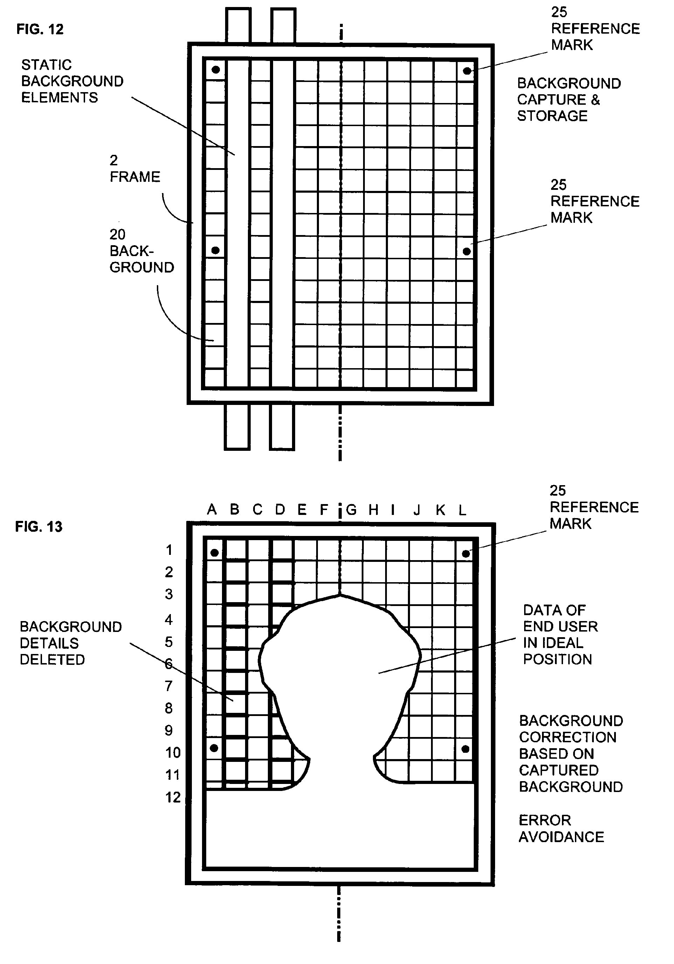

In order to avoid these problems in correction and/or extraction processes, the inventive method uses additional information that is obtained by capturing a background sample of the background in the recording area, preferably within the frame 2, without the presence of the end user (see figure 12). In this way, background information is obtained that can be used for accurately identifying background details in a captured biometric sample. Hence separation between background data on the one hand and end user image data on the other side can precisely be performed. E.g., the algorithm traces data with specific property (typically colour information), in regions where background elements were recorded. The decision process is facilitated if colours of the face and colours of the background elements are similar.

Hence before the biometric image sample is further processed the background is identified and deleted or replaced by a uniform colour. This process results in a purified biometric image sample which can immediately be printed or further processed for additional corrections and/or for the extraction of biometric data, e.g. by measuring geometrical details such as the distance between the eyes.

As shown in figure 13 details of background elements can now accurately be deleted thus avoiding the described separation problems and allowing precise adjustments for bringing the pictured end user in an ideal position, by executing the steps described above.

In a preferred embodiment a plurality of background samples is captured and an averaged background sample is calculated. With this measure, random fluctuations above and below actual image data will gradually even out as more and more images are processed, so that noise is gradually reduced and luminance is approaching true values.

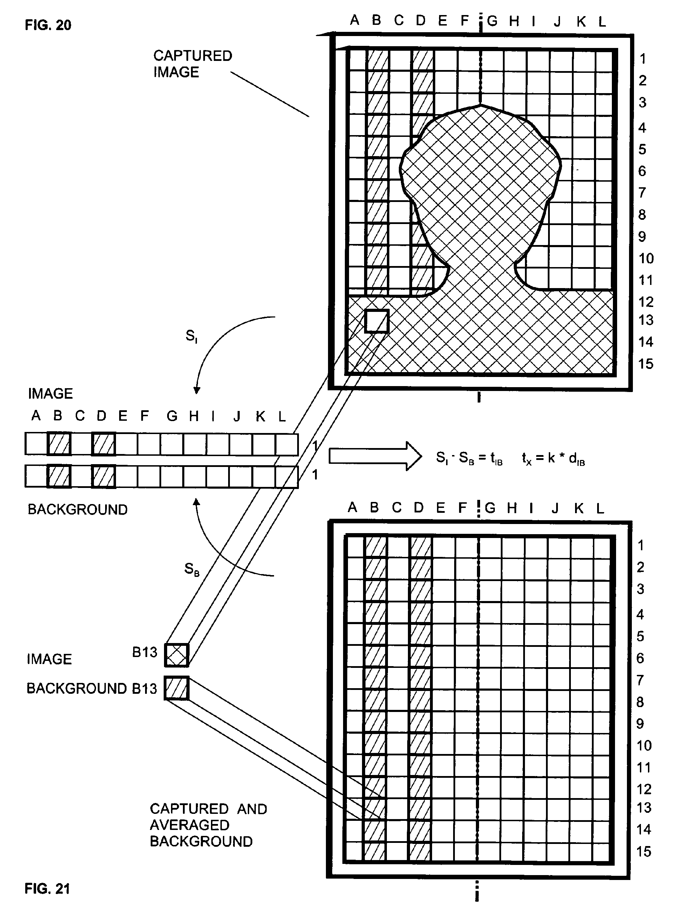

Figures 20 and 21 illustrate a preferred process for identifying background in a biometric image sample (see figure 20) by means of a preferably averaged background sample (see figure 21).

For the detection of background, the averaged background image is split into small segments, which are sequentially compared with segments of the biometric image sample. Subsequently, segments of the biometric image sample which are matching the background segments with a difference that lies within a predefined operating threshold tₓ are classified as background.

In figures 20 and 21, the squares B13 from the image sample and the background sample are currently compared, which do not match. In order to reduce processing time and efforts, a segment of the background sample is preferably compared with segments of the biometric image sample that are in the same range. If statical or optical markers are provided in the images then the images may be superimposed with the corresponding segments being aligned with one another.

For calculating the operating threshold tₓ, the border segments of row 1 of the background sample and row 1 of the biometric image sample (sets S_{I} and S_{B} with segments A1, ..., L1) are compared, since it is expected that this regions contain background only. Based on this comparison the difference d_{IB} of the segments A1, ..., L1, preferably the difference of the significant elements thereof, is calculated and weighted with at least one tolerance factor k, which determines the admissible deviation from the difference d_{IB} calculated for row 1.

In a preferred embodiment of the invention, an operating threshold tₓ is therefore calculated for each biometric image sample to be processed.

Figures 12 and 13 further show reference marks that have statically or dynamically been added on specific locations on the background. Coloured spots could be added statically to the wall on the background. As an alternative the camera 101 may be provided with light pointers that dynamically apply optical markers whenever a picture is taken. These reference marks provide additional positional information for analysis and correction processes and will be removed from the biometric sample together with the other background information.

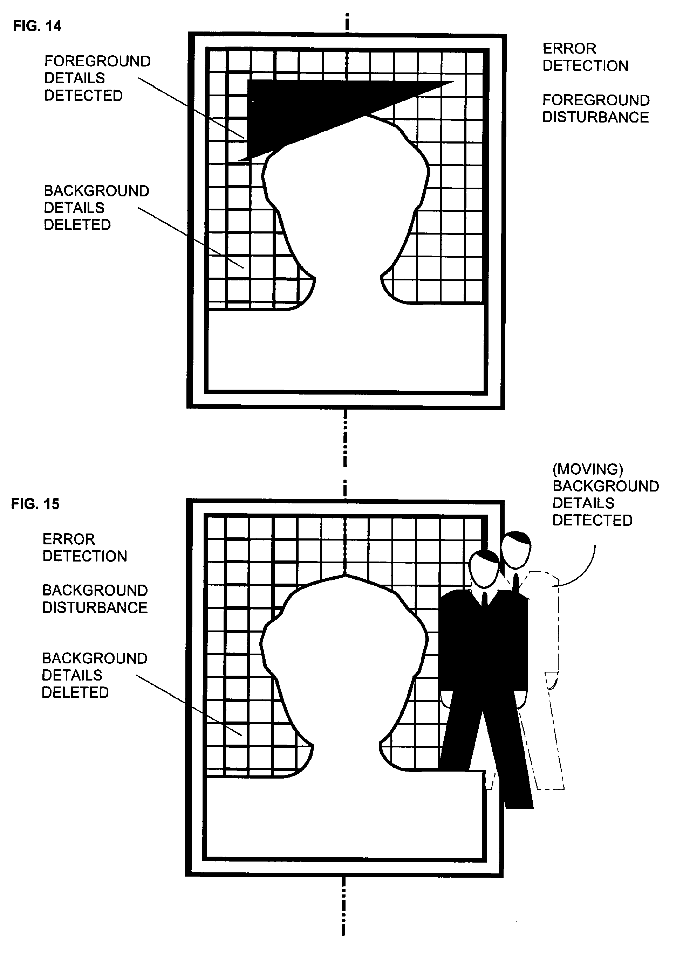

As described above, while the removal of background information is possible, removal of foreground details is not applied (see figure 14). However since the inventive method allows a more accurate separation of background data and end user image data, the detection of disturbing foreground objects such as hats or caps is also facilitated. In addition moving objects in the background, as shown in figure 15, can more easily be detected, resulting in more accurate feedback information to the end user of to prepare for the next capturing process.

The inventive method allows therefore obtaining standardised biometric samples by dynamically providing feed back information to the end user and/or by correcting captured biometric samples and/or by accurately removing background information.

Figure 19 illustrates of how the flawed biometric sample could automatically be corrected by means of the inventive method. In a first step static and dynamic background elements have been identified and removed based on the information contained in the previously recorded background sample. Then, by evaluation of the coverage of the purified background by the end user and by balancing the load on all quadrants evenly or according to a tested formula, face has been centred, rotated and zoomed. Hence, compared to the initial biometric sample shown in figure 18, the derived biometric sample in figure 19 has significantly been improved. Hence also the quality of the extracted biometric data will consequently be much higher.

Figure 16 shows an inventive apparatus 1 that has been extended to a Biometric System by installing a biometric identification module 106. The apparatus comprises essentially a camera 101, a man machine interface 102 and a control unit 104 that is equipped with a capturing module 105. Principally a modern personal computer could be used as the control unit 104.

The capturing module 105, that is provided and loaded in the form of application software, comprises a background capturing module 1051, a background analysis module 1052, an optional correction module 1053 and a background removal module 1054.

The apparatus 1 optionally comprises an optical pointer 103 used for projecting the reference marks shown in figures 11 and 12.

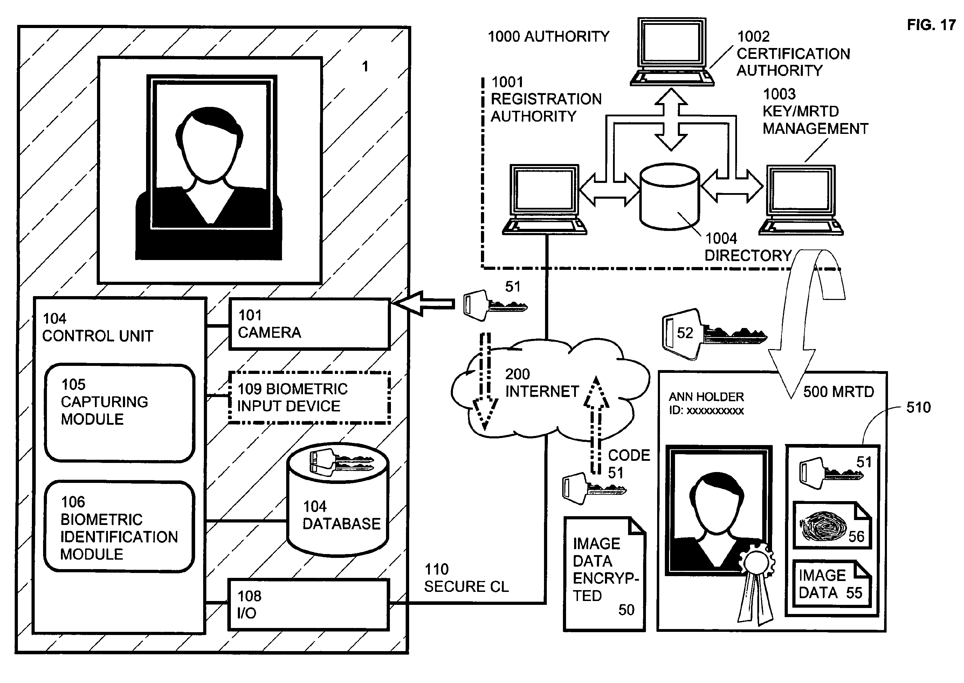

Still further, the apparatus optionally comprises an I/O board 108 that can be connected to a network 200 as shown in figure 17. Data, particularly templates downloaded over the network can be stored in the database 104.

With an optional biometric identification module 106 the apparatus has been extended to a biometric system which can perform identification and validation processes described above.

Further shown is a biometric input device 109 which allows finger print reading.

As described above, inventive apparatuses will typically be used decentralised and distant from the registration authority 1001 or an authority 1000 comprising a registration authority 1001, a certification authority 1002 and key and certificate management department 1003 comparable to the corresponding units of a public key infrastructure, which is described for example in A. Menezes, P. van Oorschot, S. Vanstone, HANDBOOK OF APPLIED CRYPTOGRAPHY, CRC-Press, Boca Raton 1997, chapter 1.

In order to securely transfer the obtained biometric image sample or the related biometric data to the registration authority 1001 the transfer is performed over a network 200 such as the Internet. Data are sent, preferably encrypted and compressed, and accompanied by identification data and credentials of the end user.

Preferably the transferred data are encrypted by means of a key 51 of an asymmetric key pair that has been issued by the registration authority 1001 and then sent electronically to the registration authority 1001. The registration authority 1001 may assign a bulk of keys 51 of asymmetric key pairs to each inventive apparatus 1, which there may be stored in the database 104. With such a key 51, preferably a key that later may be used as the public key of a PKI system, the biometric data can be encoded. This public key 51 may also be used as the electronic identification number of the certificate 500, e.g. an MRTD, to be issued by the registration authority 1001 or the management department 1003.

Hence, the transferred data that has been encrypted by means of the PKI key 51 can only be decrypted by the registration authority 1001, which is the holder of the second key 52. After the certificate 500 has been issued, the registration authority 1001 may forward the second key 52 to the certificate holder or end user, who may use it as a private key.

Hence issued the certificate 500 is strongly bound to the enrolled end user and to the public key 51, that, together with the biometric image data, and if provided with additional biometric data 56 (e.g. the finger print) is contained in a chip 510. The private key 52 may be given to the end user stored in a memory stick. Hence the older of the passport can be identified by means of the MRTD and the biometric information stored on it. In addition the end user may be asked to present the separately held private key 52 for identification purposes. If the true owner should have lost the private key, then its revocation can be registered in the directory 1004 of the authority 1000. When crossing a border the end user can be requested to present the private key which allows checking ownership and validity of the MRTD. Hence, in the directory 1004 the authority may register a revocation of the MRTD, e.g. due to an offence against official law, the user may immediately invalidate the private key 52 giving him means of immediate action against misuse of the MTDR 500 in case of theft.

As a consequence MRTD and PKI authorities merge together providing doubled trust into the issued MRTD 500. Further with the inventive method, all processes from enrolment until revocation are simplified, better secured and more economical to handle.

Based on the MRTD the end user could ask at a later stage for replacement of his key set. Since all required credentials are available on the MRTD 500 issuance of the key set at a local branch of the authority, preferably a political institution. The public key 51 could be replaced in the chip 510, while the private key could be stored in the token or memory stick, thus avoiding online transfers which would also be possible.

Although the present invention has been described in detail with reference to preferred embodiments, a person with ordinary skill in the art will appreciate that various modifications and different implementations may be made without departing from the spirit and scope of the invention. The described certificates are not limited to travel documents or for use when crossing a border, but may also be used for commercial purposes. The inventive apparatus has been described with essential and optional elements but may also be equipped with any other known modules used in such systems such as cash collectors, adjustable chairs, voice recognition systems, sound systems, etc..

Further the techniques described above can be implemented individually or in combination. Removal of background information can be performed without correction of the position of the end user. Correction of the position of the end user can be performed without removal of background information and even without initially capturing the background information; particularly if a uniform background is provided. The inventive technique of electronically transferring biometric image samples or biometric image data to the authority 1001 can be applied independently of the techniques applied for capturing and processing biometric samples.

## Claims

1. Method for obtaining biometric image samples or biometric image data by capturing a biometric image sample from the face of an end user with an image recording device (101) that is controlled by a control unit (104) provided in an apparatus (1) by means of a capturing module (105) comprising the steps of capturing a background sample of the background in the recording area without the presence of the end user in order to obtain background information, subsequently capturing a biometric image sample from the end user and processing related image data based on the obtained background information in order to obtain accurate data of the background information contained in the biometric image sample.

2. Method according to claim 1 comprising the steps of providing static or dynamic reference marks in the background of the recording area and/or comprising the steps of capturing a plurality of background samples and calculating an averaged background sample.

3. Method according to claim 1 or 2 comprising the steps of sequentially comparing all segments taken from the background sample with at least the segments of the biometric image sample, which are expected to lie in the same range, and classifying segments of the biometric image sample as background, if the calculated difference between compared segments is within a predetermined operating threshold (tₓ).

4. Method according to claim 1, 2 or 3 comprising the steps of comparing segments, preferably border segments of the biometric image sample, which are expected to contain background only, with corresponding segments of the background sample and evaluating the difference (d_{IB}) of the segments, preferably the difference of the significant elements thereof, and calculating the operating threshold (tₓ) by weighting the difference (d_{IB}) with at least one tolerance factor (k).

5. Method according to one of the claims 1-4 comprising the steps of relating objects such as reference marks (25) contained in the captured biometric image sample to objects contained in the background sample in order to identify the objects in the captured biometric image sample and classifying related data as non-biometric background data, either as common background data or as reference marks (25).

6. Method according to one of the claims 1-5 comprising the steps of analysing the determined non-biometric background data preferably based on the reference marks (25) in order to determine whether the biometric sample or data is in conformance with a predetermined standard or comprises deficiencies.

7. Method according to claim 6 comprising the steps of determining based on the captured biometric image sample, whether the identified background data
a) contains asymmetries indicating that the head of the end user is tilted and/or not centred or that foreground disturbances are present;
b) contains optical disturbances that were not present in the initially recorded background;
c) contains possibly moving background objects that were not present in the initially recorded background;
d) is smaller or larger than given thresholds indicating that the distance of the end user from the image recording device (101) is incorrect; and rejecting the captured biometric image sample or correcting the image data of the captured biometric image sample.

8. Method according to one of the claims 1 to 7 comprising the steps of deleting background information within the biometric sample and then extracting biometric data from the biometric sample and preferably comprising the steps of further processing the biometric image sample or biometric image data for enrolment, identification or validation purposes.

9. Method according to claim 8 comprising the steps of sending the obtained biometric image data preferably accompanied by identification data and credentials of the end user
a) electronically, preferably encrypted, signed and compressed, over a network (200) to the registration authority (1001); or
b) encrypted by means of a key (51) of an asymmetric key pair that has been issued by the registration authority (1001) electronically over a network (200) to the registration authority (1001); or
c) electronically, encrypted and accompanied by additional biometric data, preferably a fingerprint, over a network (200) to the registration authority (1001).

10. Method according to claim 9 comprising the steps of using the key (51) with which the biometric image and/or fingerprint data has been assigned as the identification number of the certificate (500) such as the machine readable travel document that will be issued at the end of the enrolment process preferably together with the second key (52) of the asymmetric key pair.

11. Apparatus (1) designed for obtaining biometric image samples or biometric image data by capturing a biometric image sample from the face of an end user with an image recording device (101) that is controlled by a control unit (104) by means of a capturing module (105) according to a method as defined in one of the claims 1-10 for capturing a background sample of the background in the recording area without the presence of the end user in order to obtain background information and for processing image data of a subsequently captured biometric image sample of an end user based on the obtained background information in order to obtain accurate data of background information contained in the biometric image sample.

12. Apparatus (1) according to claim 11 comprising
a) a man machine interface (102) designed for accepting information from the end user and to provide information to the end user relating to the enrolment process and the process of capturing biometric samples; and
b) at last one processing unit contained in the control unit (104) designed for executing programs of an operating systems and application software such as image analysis and processing programs contained in the capturing module (105).

13. Apparatus (1) according to claim 12 further comprising
a) optical transmitters (103) for generating reference marks (25) in the background of the recording area; and/or
b) an alternative biometric input device (109) such as a fingerprint reader or an iris reader; and/or
c) a database (104) for storing, end user data, image data, biometric data, templates, alternative biometric data and/or one sort of keys (51) of asymmetric key pairs issued by the registration authority (1001) for the individual identification and encryption of biometric data captured from an end user;
d) an interface board (108) that over a communication line (110) and a network (200) can exchange encrypted or unencrypted data with the registration authority (1001).
